# EUROPEAN PATENT SPECIFICATION

(11) **EP 2 079 960 B1**
(45) Date of publication and mention of the grant of the patent: **07.11.2012**
(21) Application number: 07834625.1
(22) Date of filing: 08.10.2007
(51) Int. Cl.: F16M 11/12

(54) **SUPPORT ARM**
STÜTZARM
BRAS DE SUPPORT

(30) Priority: 06.10.2006 NL 2000262; 20.02.2007 US 707859
(43) Date of publication of application: 22.07.2009
(60) Divisional application: 11172905.9
(73) Proprietor: Stichting Escrow TV-Motions, 3421 CV Oudewater (NL)
(72) Inventor: Stoelinga, Dirk Jan, 3755 LC Eemnes (NL)
(74) Representative: Ketelaars, Maarten F.J.M.
(86) International application number: PCT/NL2007/050487
(87) International publication number: WO 2008/041853

(56) References cited:
- EP-A- 1 312 852
- EP-A- 1 471 300
- GB-A- 2 416 062
- US-A- 4 170 336
- US-A- 5 321 579
- US-A- 5 332 181

## Description

### Background of the invention

The invention relates to a support arm for an apparatus, preferably a display screen, specifically a flat display screen. The invention furthermore relates to a pivot joint, in particular suitable for a support arm.

Such a support arm is known from EP-A2-1.312.852 and GB-2.416.062, for instance. These arms have a first member which is pivotally connected to a second member. The arms are not specifically suited for mounting a flat screen to for instance a wall. Due to their construction, these arms leave a substantial distance between a flat screen and a wall when the arm is in its folded position.

Another arm is disclosed in US-5321579. In its folded position, this arm is very flat, holding a flat screen almost against a wall. This arm, however, needs to be mounted underneath a flat screen of flat panel display.

US-4.170.336 discloses a suspension arm for an operating room microscope. These microscopes are not very heavy. Furthermore, these arms are very difficult to automate.

US-5.332.181 discloses a motorised stand for a medical instrument. It has several members which are connected via hinges or rotary joints. The nature of these joints is not disclosed. Furthermore, the purpose of that support arm is to provide optimal manoeuvrability. Full stabilization under heavy loads may prove difficult.

EP-A2-1.471.300 discloses an arm for supporting a flatscreen. It has several members which are mutually connected via hinges. In particular, the fastening part for attaching a flat screen to the arm is described. That fastening part can be attached to the back of a flat screen, detachably connected to an end of the arm, and provide possibilities for tilting the flat screen.

It is difficult to automate the known support arms and they are not stable. Often, due to the weight in combination with the long arm which causes high torque, backlash will occur after some use.

### Summary of the invention

It is an object of the invention to provide a support arm which can be manufactured in a simple and inexpensive manner from components which can readily be obtained and modified.

It is another object of the invention to provide a support arm which can easily be automated.

It is another object of the invention to provide a support arm which is and remains stable, even with intense use.

To this end, the invention provides a support arm according to claim 1.

As a result of the positioning of the members with respect to one another and the use of the pivot joints, a support arm can be produced in a simple and inexpensive manner, which support arm is simple to operate and remains stable during operation, even with large and heavy display screens.

In this context, the term pivot joint is understood to mean a joint which connects two members to one another and allows for the two members to rotate with respect to one another, that is to say for two straight members which are in line with one another to pivot relative to one another about the longitudinal axis through the two members. This is in contrast with a hinge joint which allows for two members to hinge relative to one another.

In one embodiment of the support arm, the second member is substantially U-shaped. As a result, it is readily possible for the axes of rotation of the pivot joints to be parallel. However, the two legs of the U in this case do not have to be of equal length.

In one embodiment of the support arm, the first member is substantially L-shaped.

In one embodiment of the support arm, the second fastening part is connected to a third member and the third member is coupled to the second pivot joint.

In one embodiment of the support arm, the third member is substantially L-shaped.

In one embodiment of the support arm, the third member is connected to the second pivot joint via a third pivot joint. By means of this construction, the display screen can be positioned in virtually any viewing position and the display screen can be easily displaced by means of the support arm.

In one embodiment of the support arm, the members comprise tube parts, the pivot joints comprising inner tube parts mounted in the tube parts, the inner tube parts in particular being mounted by means of an outer ring for forming a stop for an end of a tube part of a member, the stop running obliquely with the acute angle being situated against the inner tube surface and the end surface of the tube parts running obliquely with the acute angle being situated at the outer surface, the outer ring preferably being a plastic ring, for example made of nylon. In one embodiment, the tube parts are simply iron tube parts. This makes it possible to produce a support arm which is stable and inexpensive and virtually without play.

In one embodiment of the support arm, inner tube parts are furthermore mounted by bearing parts at the ends of the inner tube parts which extend into the tube parts, the bearing parts outside the outer wall of the inner tube parts extending as far as against the inner wall of the outer tube parts, and preferably being made of plastic, such as nylon.

In one embodiment of the support arm, the pivot joints furthermore comprise clamping parts for rotatably clamping the stop of the outer ring onto the end of the tube parts.

In one embodiment of the support arm, the first joint is coupled with an actuator which, during operation, swivels the second member about the first axis of rotation, the second joint is coupled to a second actuator which, during operation, causes the second fastening to rotate or swivel about the second axis of rotation, and displaces the second fastening part relative to the first fastening part upon actuation of the first and second actuator. As a result of the abovementioned construction, it is simple to fit actuators, preferably provided with electric motors, as a result of which the support arm can be operated and adjusted, for example by means of a remote control. To this end, a control unit is furthermore provided.

The invention furthermore relates to a support arm, in particular for a flat display device, such as an LCD screen or plasma screen, comprising a first and second member having a first and second longitudinal axis and a first joint which connects the members to one another at an angle, the first member being coupled to a fastening part for attaching the arm, the first joint comprising a first angle part having a first and second end, the first end being coupled to the first member so as to be rotatable about the longitudinal axis of the first member, and the second end being coupled to the second member so as to be rotatable about the longitudinal axis of the second member, and the first and second end being coupled to a first and second drive unit, respectively, which are connected to a first and second member, respectively, in order to cause the first angle part, upon actuation of the first drive unit, to rotate about the longitudinal axis of the first member and in order to cause the second member, upon actuation of the second drive unit, to rotate about its longitudinal axis.

In one embodiment this support arm comprises a third member having a longitudinal axis and a second joint which connects the second member and the third member to one another, and the second joint in this case comprises a second angle part having a first and second end, the first end being coupled to the second member so as to be rotatable about the longitudinal axis of the second member, and the second end being coupled to the third member so as to be rotatable about the longitudinal axis of the third member, and the first and second end are coupled to a third and fourth drive unit, respectively, which are connected to the first and second member, respectively, in order to cause the second angle part, upon actuation of the third drive unit, to rotate about the longitudinal axis of the second member and in order to cause the third member, upon actuation of the fourth drive unit, to rotate about its longitudinal axis. Connecting pivot joints to one another by means of an angle part makes it possible to provide a simple and stable adjustment. By, for example, producing an angle part (preferably of 90 degrees) of tubes and by mounting the two ends of the angle part in tube ends or by accommodating them by means of bearings in tube parts, two pivot joints at right angles are produced in a simple manner.

In one embodiment of this support arm, the third member comprises a frame fastening part for attaching a frame, in particular for attaching a flat display device, such as an LCD screen or a plasma screen. The support arm according to the invention can, for example, be folded flat in a simple manner between the wall and the flat display screen.

In one embodiment of this support arm, in a starting position, the fastening part and the first, second and, if present, third member and frame fastening part are essentially situated in a starting plane.

In one embodiment of this support arm this furthermore comprises a hinge connected to the first member and the fastening part for hingedly coupling the first member to the fastening part, as a result of which an angle adjustment of the longitudinal axis of the first member in the starting plane is possible.

In one embodiment of this support arm, this furthermore comprises an actuator between the fastening part and the first member, in particular, between the fastening part and, if present, the hinge, the actuator comprising a first actuator part which is connected to the fastening part and a second actuator part which is connected to the first member and/or the hinge, and the first and second actuator part being displaceable relative to one another along an axis of displacement.

In one embodiment of this support arm the axis of displacement is substantially parallel to the starting plane, and preferably extends substantially in the starting plane.

In one embodiment of this support arm, the drive units are furthermore coupled to the pivot joints by means of transmissions, the transmission being provided with a drive shaft in line with the longitudinal axis and with a first ring with internal toothing thereon which is connected to the one tube part, an eccentric gear wheel with a toothing which is at least one tooth smaller than the internal toothing of the first ring and the toothing of which engages with the internal toothing of the first ring and which is provided with driver parts, and a second ring which is connected to the other tube part and which is provided with the driver parts which mate with the driver parts of the gear wheel, as a result of which the first and second ring rotate with respect to one another when the drive unit is in operation. The drive units are, for instance, electric motors.

It will be clear that the features of this support arm and the support arm mentioned before can be combined with one another.

The invention furthermore relates to a pivot joint for a support arm, comprising a first tube part having a longitudinal axis, a second tube part, one end of which is rotatably mounted and extends into the first tube part, and provided with an electric motor attached in the first or second tube part, the first tube part and the second tube part being coupled to one another by means of a transmission, the transmission being provided with a drive shaft, driven by means of the electric motor and in line with the longitudinal axis and with a first ring with internal toothing thereon and which is connected to the one tube part, an eccentric gear wheel with a toothing which is at least one tooth smaller than the internal toothing of the first ring and the toothing of which engages with the internal toothing of the first ring and which is provided with driver parts, and a second ring which is connected to the other tube part and which is provided with driver parts mating with the driver parts of the gear wheel, as a result of which the first and second ring rotate with respect to one another when the electric motor is in operation. The pivot joint can easily be produced by means of tubes, is able to transmit and/or generate great forces, is virtually without any play and, in rest, maintains its position.

In one embodiment of this pivot joint, the first ring and the second ring are in this case mounted on the drive shaft of the transmission.

In one embodiment of this pivot joint, the gear wheel is provided with pins as driver parts, which pins extend into holes in a second ring, which holes have a larger diameter than the diameter of the pins. As a result, the first and second ring can be functionally and operationally coupled to one another in a simple manner.

It will be clear that the different aspects mentioned in this patent application can be combined and each individual aspect qualifies for a divisional patent application.

### Brief description of the drawings

The attached figures show various embodiments of a support arm and a pivot joint according to the invention, in which:
Fig. 1 shows a first embodiment of a support arm according to the invention;
fig. 2 shows an embodiment of a control device for the support arm from Fig. 1;
fig. 3 shows a side view of an electric motor with a transmission for the support arm from Fig. 1;
fig. 4 shows a front view of Fig. 3;
fig. 5 shows an exploded view of Fig. 3;
fig. 6 shows an alternative embodiment of a support arm according to the invention;
fig. 7 shows an embodiment of the support arm from Fig. 6 in a tilted position and moved forward;
fig. 8 shows the support arm from Fig. 7 tilted towards the other side;
fig. 9 shows an alternative pivot joint;
fig. 10 shows an alternative embodiment of a support arm in top view, moved forward and in a tilted position;
fig. 11 shows the arm of fig. 10 in side view;
fig. 12 shows the arm of fig. 10 in almost completely folded position;
fig. 13a shows one of the hinges of the arm of fig. 10 in the cross section XIIIa as indicated on fig. 12;
fig. 13b shows an other of the hinges of the arm of fig. 10 in the cross section XIIIb as indicated on fig. 12;
fig. 13c shows the cross section XIIIc indicated in fig. 12.

### Description of embodiments

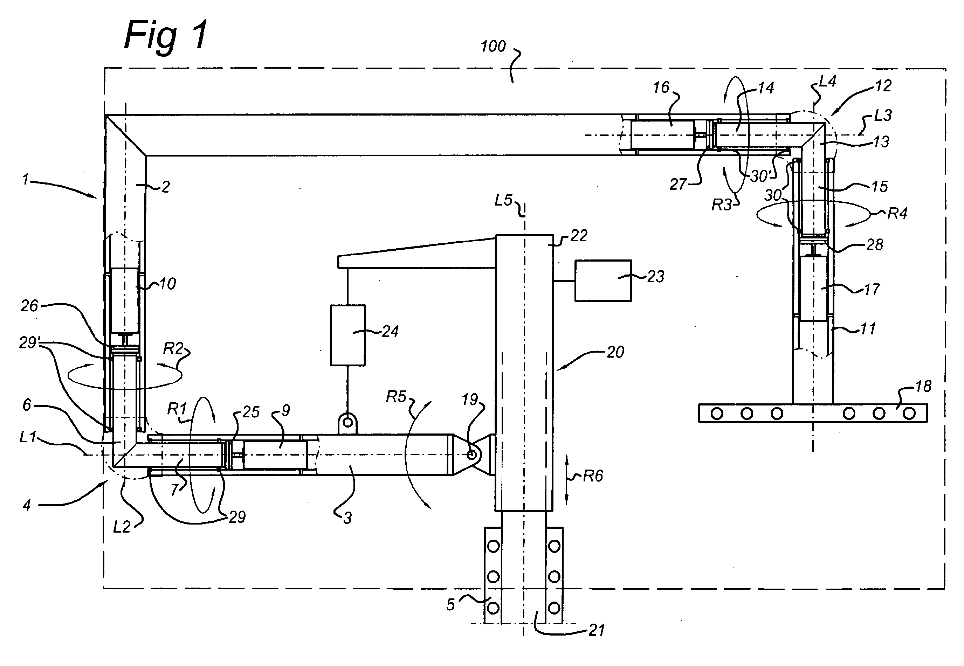

Fig. 1 shows a support arm 1, which is in this case provided with a flat LCD screen 2 which is indicated by means of dashed lines. The support arm 1 is provided with a first member 3 and a second member 2, which have a first longitudinal axis L1 and a second longitudinal axis L2, respectively. The first member 3 and the second member 2 are coupled to one another by means of two rotation joints 4, which connect the two members 3, 2 at an angle. The members 2, 3 are in this case connected at an essentially right angle. The first member 3 is coupled to a fastening part 5, in this case a fastening part for attaching the arm 1 on or against a wall. Alternatively, the support arm may also be attached to a floor or on or in a piece of furniture. A fastening part will be adapted to such a construction. For a person skilled in the art, the design of such a fastening part is simple. The members in this description are preferably round tubes.

The first pair of joints 4, which connects the first member 3 and the second member 2 to one another at an angle, makes it possible to carry out a rotation about the longitudinal axis L1. This rotation is indicated by R1. In addition, the pair of joints 4 makes a rotation about the axis L2 possible. This rotation is indicated by R2.

The first pair of joints 4 has an angle part 6, in this case an elbow, which connects the two joints to one another. The angle part is provided with a first end 7 and a second end 8. The first end 7 is coupled to the first member by means of a transmission 25 and is driven by means of a drive 9, in this case an electric motor, which in this case is also connected to the first member 3. In this embodiment, the first member 3 is designed as a hollow tube. The first end 7 is mounted rotatably by means of bearings 27 in this tube and forms the first pivot joint. The second end 8 of the angle part 6 is coupled to the second member 2 by means of a transmission 26 and the coupling is driven by a drive unit 10, likewise an electric motor, which in this case is also connected to the second member 2. The second member 2 is in this embodiment also designed as a tube, for example a round tube. The second end 8 of the angle element 6 is also mounted rotatably here by means of bearings 28 in the tube and thus forms the second pivot joint. As a result, the tube of the second member 2 can rotate about the longitudinal axis 2, which rotational movement, as mentioned earlier, is indicated by R2. The second member 2 is bent, in this case at an angle of 90°, and has a second part with a longitudinal axis L3. The end of that part of the second member 2 is provided with two pivot joints 12, which couple the end of the second member 2 to a third member 11 at an angle. The second pair of joints 12 is virtually identical to the first pair of joints 4.

The second pair of pivot joints 12 is connected to one another by means of an angle part 13, in this case also designed as an elbow made from tube parts, having a first end 14 and a second end 15. The third member 11 has a longitudinal axis, which is indicated by L4. The first end 14 of angle part 13 is coupled to the second member 2 by means of a coupling 27 and the coupling is driven by means of a drive unit 16, in this case once more an electric motor. The second end 15 of angle part 13 is coupled to the fourth member 11 by means of a transmission 28 and in this case the coupling is also driven by means of an electric motor 17. Driven by the drive units 16 and 17, the pair of joints is able to make a rotation about longitudinal axis L3 possible, this rotational movement is indicated by R3, and the pair of joints is able to make a rotation about longitudinal axis L4 possible, this rotational movement is indicated by R4.

In this embodiment, the third member 11 is designed as a tube part just like the other members, preferably a round hollow tube part. By means of bearings 29, the first end 14 of angle part 13 is rotatably mounted in the tube part, the bent tube part of the second member 2, which bent tube part has a longitudinal axis L3. As a result, a third pivot joint is formed and the third member can rotate about this longitudinal axis L3, which rotational movement is indicated by R3 in the figures. By means of bearing 30, the angle part 13 is rotatably mounted in the tube part of the third member 11 with its second end 15 and forms the fourth pivot joint, so that the tube part can rotate (R4) about its longitudinal axis L4.

In this embodiment, a fastening part 18 is fitted to the end of the third member 11, by means of which the LCD screen 2 can be attached to the arm. The person skilled in the art may, of course, also come up with and conceive other kinds of fastening.

In this case, the first member 1 is at one end connected by means of a hinge 19 to an actuator 20, which is provided with the abovementioned fastening parts 5. The hinge makes an angle adjustment of the first member 3, in particular of the longitudinal axis L1 thereof, possible. This angle adjustment is indicated in Fig. 1 by R5. The angle adjustment may be carried out by means of a drive unit 24, illustrated in the figure, which will be driven by means of an electric motor in one embodiment.

The actuator 20 makes it possible to adjust the arm 1 along the longitudinal axis L5. In practice, this will be a height adjustment. To this end, the actuator 20 comprises an outer tube 22 with an inner tube 21 inside it. In one embodiment, the inner tube 21 is provided with an outer screw thread, thus in effect forming a spindle, and the outer tube 22 is provided with a spindle guide, which is not shown in more detail in the figure. By means of a drive unit 23, in this case an electric motor, the inner tube or spindle 21 is made to rotate via a right-angled transmission, as a result of which the outer tube will be displaced linearly along the longitudinal axis L5. When the support arm 1 is attached, for example to a wall, by means of the fastening parts 5, it will consequently be possible to move the display screen 2 up and down.

In the support arm, the pivot joints are formed by tubes mounted inside one another. By coupling the tubes to one another by means of a coupling and subsequently driving the coupling, for example by means of an electric motor, an operable support arm can be achieved.

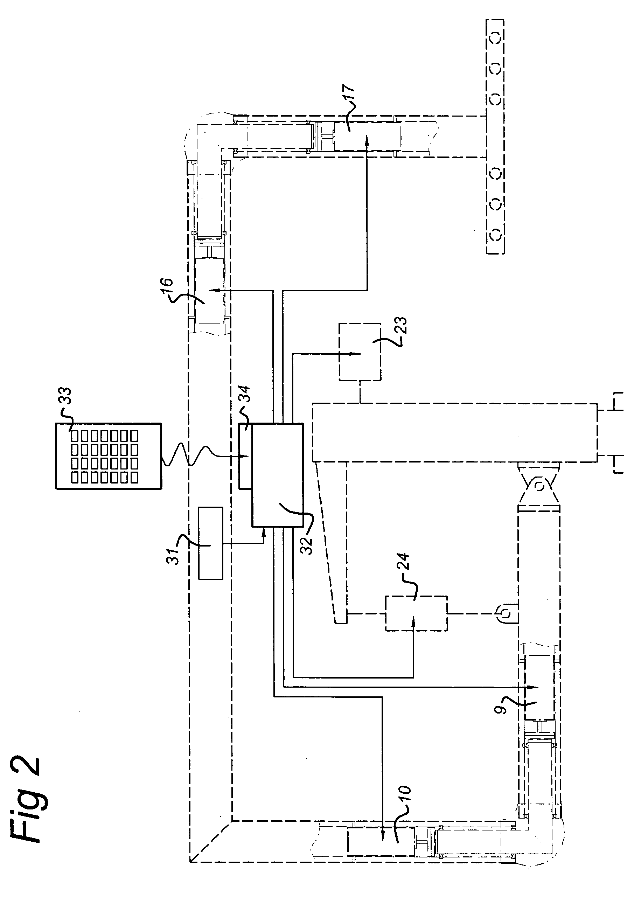

Figure 2 shows the control mechanism of the support arm from Fig. 1, in which, for the sake of clarity, the components which have already been illustrated in Fig. 1 are indicated by dashed lines.

The control device 32 is in this case provided with a wireless receiver 34, to which instructions for the displacement of the support arm can be given by means of a remote control 33. Furthermore, the support arm is provided with an electronic spirit level 31, which emits signals to the control device 32. In use, an individual operating the support arm, for example in order to displace a flat LCD or plasma screen attached to the support arm, will give the instruction, by means of the remote control 33, that the display screen be moved forwards or the display screen be tilted. These instructions via the remote control 33 will be sent to the receiving unit 34 of the control unit 32 wirelessly. The control unit 32 will then calculate which motors have to be actuated and will then proceed to actuate these motors. The digital spirit level 31 will determine whether the display screen is still horizontal during the displacement. If this is not the case, a signal will be emitted to the control unit 32. In practice, the readout of the digital spirit level will be sent to the control unit 32 under all circumstances. Based on the values from the digital spirit level, the control unit 32 will calculate the position of the display screen and, if the latter is no longer horizontal, the control unit 32 will emit a signal to the electric motor 24, as a result of which the position of the support arm can be adjusted, in such a manner that the display screen is horizontal again.

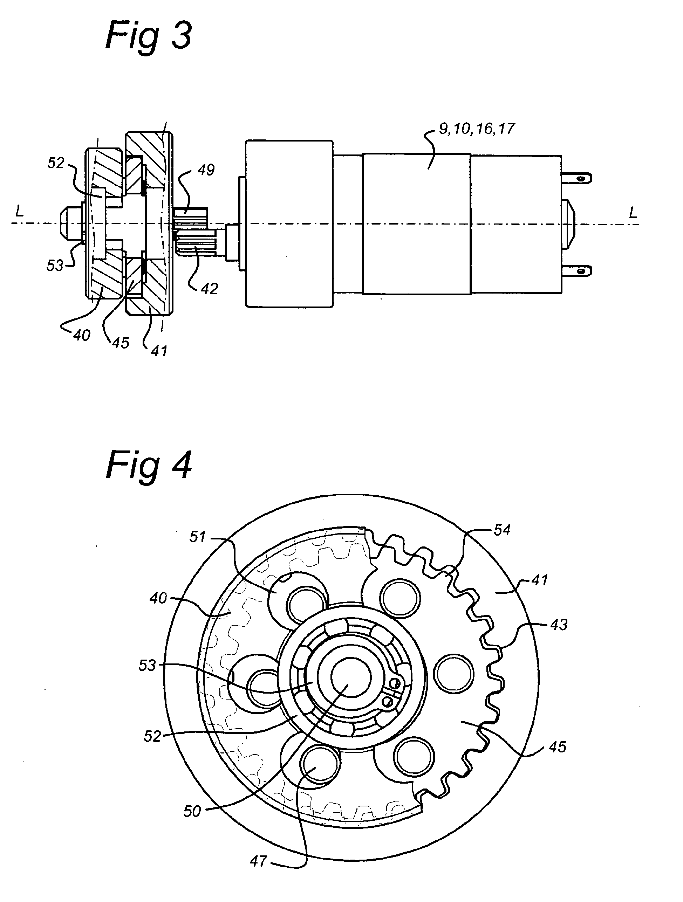

Figs. 3 to 5 show the electric motor, indicated in Figs. 1 and 2 by the numbers 9, 10, 16 and 17, provided with the coupling, indicated in Figs. 1 and 2 by numbers 25, 26, 27 and 28, in order to adjust the rotation joint or pivot joint. In Fig. 3, the longitudinal axis is indicated by L. This is the representation of the axes of rotation which are indicated in Fig. 1 by L1, L2, L3 and L4.

The coupling 25, 26, 27, 28 is driven by a toothing 42 of the drive shaft of the electric motor 9, 10, 16, 17 by means of a toothing 49.

The coupling is provided with a first ring 41, provided with an internal toothing 43 (see Fig. 4), then a gear wheel 45 provided with a toothing 54 (see Fig. 4 again) and a second ring 40. The first ring 41, gear wheel 45 and second ring 41 are mounted on a common shaft, the first ring 41 being mounted on the shaft by means of bearing 44, gear wheel 45 is mounted on the shaft eccentrically by means of eccentric or cam 48 and the second ring 40 is mounted on the end 50 of the shaft by means of bearing 52.

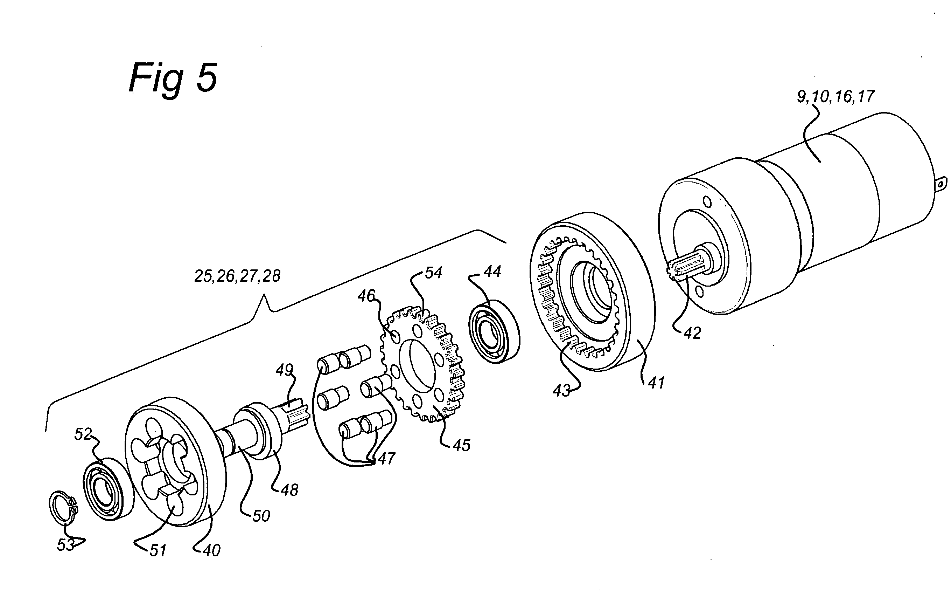

Fig. 4 shows a front view of the transmission with part of the ring 40 having been removed. In this figure, it can be seen that the toothing 54 of the gear wheel 45 has a toothing which differs only slightly (usually only by a few teeth) from the internal toothing 43 of the ring 41. The gear wheel 45 is provided with holes 46 which hold pins 47, the latter meshing with holes 51 in the ring 40. The pins 47 fit accurately into the holes 46 of gear wheel 45, and the diameter of the holes 51 in ring 40 is greater than the thickness of the pins 47. In the so-called exploded view of Fig. 5, this is all clearly illustrated.

Fig. 5 shows the transmission 25, 26, 27, 28 from Figs. 1 and 2 in exploded view. In this case, it can be seen that the toothed shaft 42 of the electric motor engages with a toothed drive shaft 49 of the transmission. Furthermore, this drive shaft is provided with an eccentric or eccentric cam 48 and an end shaft part 50. The first ring 41 is in this case mounted on a bearing 44 on the drive shaft. As is clearly illustrated here, the gear wheel 45 is provided with holes 46 into which pins 47 extend. These pins 47 furthermore extend into openings 51 of the ring 40. The ring 40 is mounted on the end 50 of the drive shaft of the transmission by means of the bearing 52, and held on this shaft by means of retaining ring 53. The cam bears against the interior of the hole in gear wheel 45 in such a manner that a part of the toothing of gear wheel 45 engages with the internal toothing 43 of the first ring 41.

The operation of the coupling 25, 26, 27, 28 is as follows. The toothed drive shaft 42 transmits the rotation of the electric motor onto the shaft of the coupling by means of the toothing 49, as a result of which this shaft will start to rotate. The gear wheel 45 is mounted on the eccentric or cam 48 and will therefore perform an eccentric rotation. The cam is designed in such a manner that the gear wheel will in each case run in part of the inner toothing 43 of the ring 41. The rotation of the gear wheel 45 will subsequently be transmitted to the ring 40 by means of the pins 47.

With the use as described in Fig. 1, the first ring 41 is connected inside the outer tube 2, 3, 11 of Fig. 1. The second ring 40 is connected, for example, to an end of the inner tube, which is indicated in Fig. 1 by reference numerals 6, 7, 14, 15.

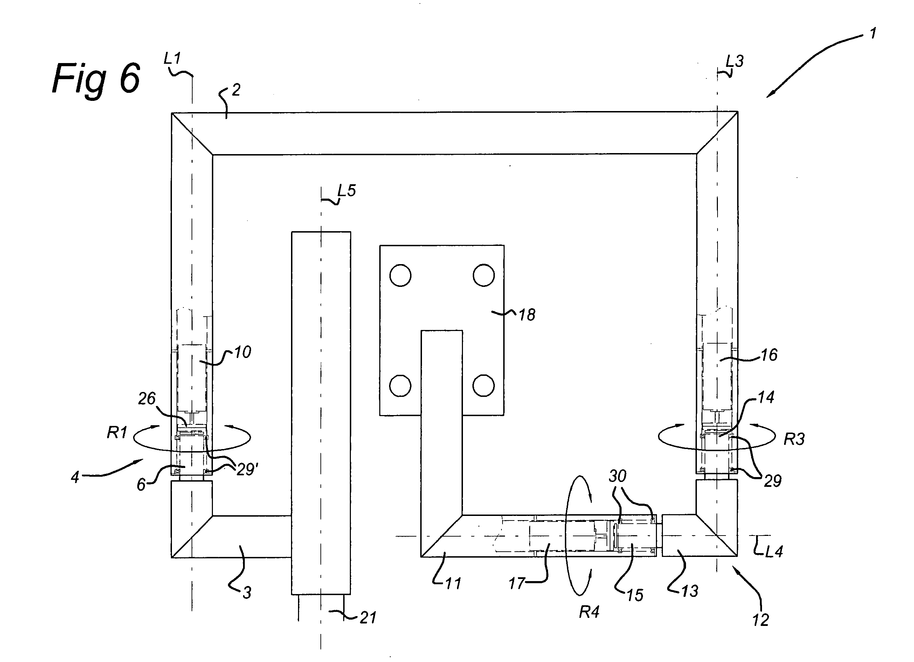

Fig. 6 shows an alternative configuration of a support arm according to the invention. In this case, the support arm 1 is provided with an L-shaped first member 3 which is attached here so that it can rotate about axis of rotation L5. Pivot joint 4 enables rotation R1 about axis of rotation L1. The second member 2 is U-shaped and has at its end a second pivot joint which enables rotation R3 about axis of rotation L3. Axes of rotation L1 and L3 are virtually parallel. By means of these axes of rotation, tilting of, for example, a flat display screen attached to the support arm about one of the axes L1 or L3 is possible. In addition, the display screen can be moved away from, for example, a wall to which the support arm is attached by means of an opposite rotation about the two axes of rotation. In this case, the orientation of the display screen will not change, that is to say the angle between L4 and L3 will in this case change little, if at all.

The display screen can tilt about an axis parallel to L4 by means of a rotation of the pivot joint about the axis L4. Thus, a display screen is completely adjustable for the viewer.

Pivot joints 12 are connected to one another by means of an elbow piece 13 which in this case has an angle of 90 degrees. As a result, axes L3 and L4 are at an angle of 90 degrees. In this embodiment, the adjustment about hinge 19 by means of, for example, an electric motor as actuator 24, as described in Fig 1, is not necessary.

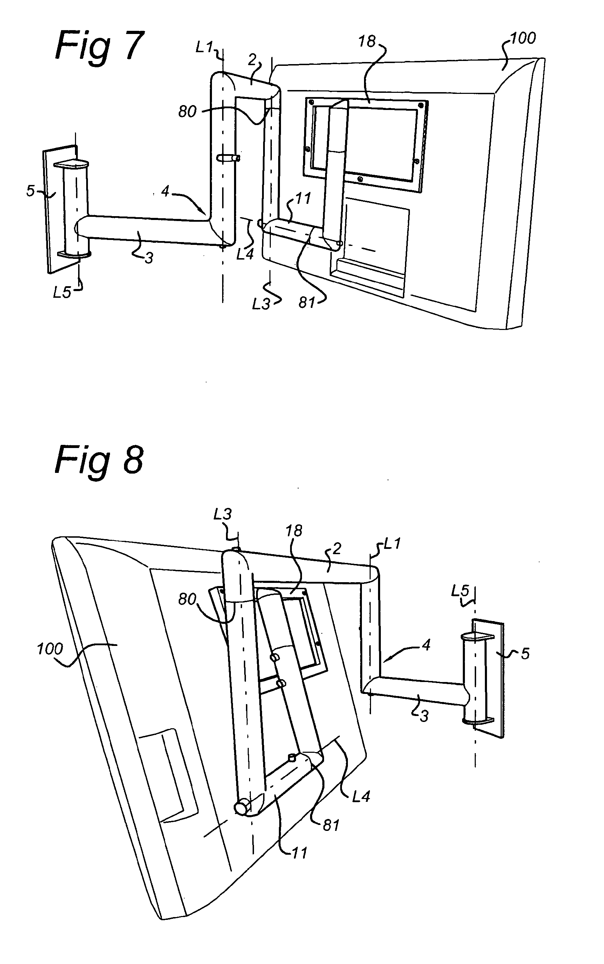

Fig. 7 shows an embodiment of a support arm for attachment to, for example, a wall. In this embodiment, the positions of the pivot joints have been selected somewhat differently from those in Fig. 6. One leg of the U-shaped member 2 is in this case shorter than the other leg, as a result of which the second pivot joint, indicated here by number 80, is situated at an earlier juncture in the support arm. In this embodiment, an L-shaped member is provided as from the second pivot joint, at the end of which a third pivot joint 81 is attached, which third pivot joint has a further L-shaped member to which the fastening part 18 is attached. In this case, a flat display screen is attached to the fastening part 18. The support arm is shown here in a position in which it has been rotated about axes L5, L1 and L3. By fitting more members and pivot joints, the distance of displacement from the wall can be increased further, as long as the axes of rotation are parallel to L5, L1 and L3, so that the display screen remains horizontal.

The display screen can furthermore be titled about the axis of rotation L4. Fig. 8 shows the support arm from Fig. 7 tilted about this axis of rotation L4.

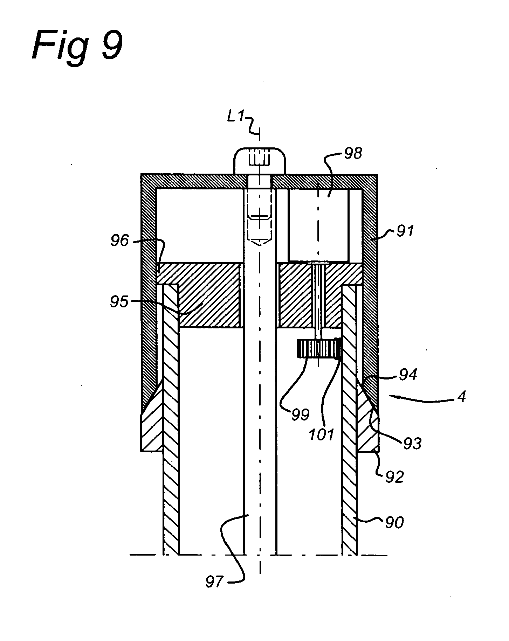

Fig. 9 shows an embodiment for a pivot hinge or pivot joint for, for example, the support arm from Figs. 7 and 8. In this case, an inner tube 90 is partly accommodated inside an outer tube 91. The outer tube illustrated here has a limited length, but in practice a support arm according to Fig. 7 or 8 will have a greater length and may possibly even be a leg of an angle part. A ring 92, preferably made of plastic such as nylon, is arranged around the outer tube 91 and has an end of the outer tube mounted on it. In order to ensure the outer tube is mounted without any play, the edge 93 of the ring 92 is bevelled, as can be seen in the figure. The end of the outer tube 91 also has a bevelled edge 94 which fits onto the bevelled edge 93 of the ring 92. In order to provide further stability and improve the mounting, the end of the inner tube 90 which extends into the outer tube 91 is provided here with an insert 95, an edge 96 of which extends outside the outside wall of the inner tube 90 up to the inner wall of the outer tube 91. The outer tube 91 is pulled onto the bevelled edge 93 of the plastic ring 92 by means of a tie rod 97. For automation, the outer tube 91 is in this case also provided with an electric motor 98, the drive shaft of which extends through the insert and provided with a gear wheel 99 which engages with a (curved) gear rack 101 on the inside of the inner tube 90. Of course, it is also conceivable to change this configuration around, that is to say to mount the electric motor inside the inner tube and the gear rack (or a ring provided with internal toothing) in the outer tube.

Optionally, for example with the embodiment of Figs. 7 and 8, it is also possible to fit a torsion spring or another pretensioned spring near joint 81 in order to compensate for the weight of a display screen or monitor.

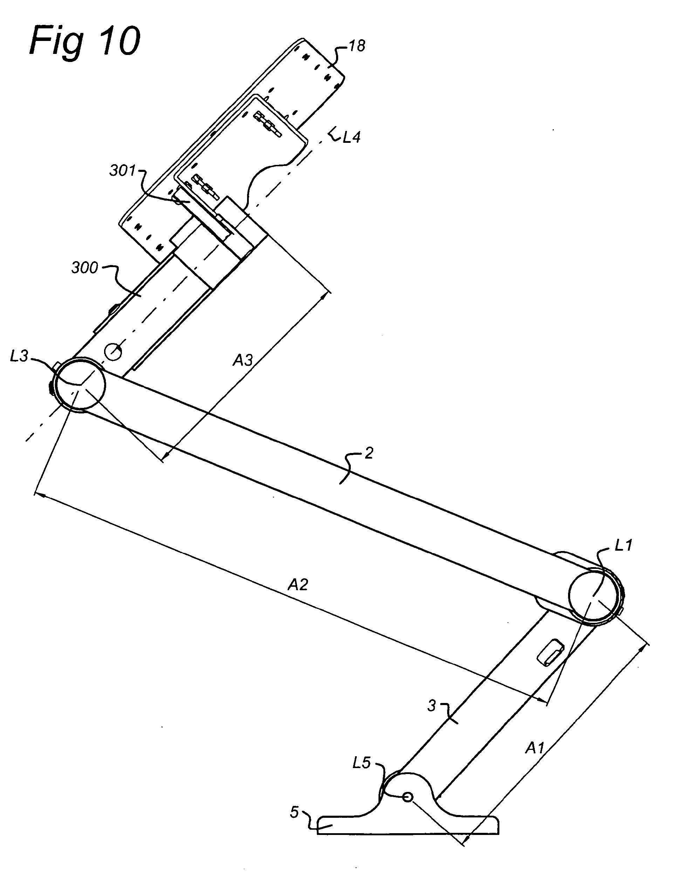

In fig. 10, an alternative embodiment for a support arm is shown. Again, this support arm can very easily be provided with actuators, mostly electro motors, which as can be seen later on are provided with gearing and transmission. The specific hinges and construction make it possible to use the support arm without actuators, and/or to build these actuators in at a later stage. Again as before, identical reference numbers refer to similar features.

Furthermore, the support arm can be folded between a support wall and for instance a flat screen in a very flat manner. In this embodiment, this is amongst other design choices, due to the selection of the lengths of the different members, their orientation and the way they are hinged.

An additional feature of this support arm, when provided with a control device, is that the control device has a setting switch which allows the selection of different sizes of flat screens to be attached to the support arm. The setting switch activates a set of settings in the control device which limits the movements of some of the hinges in case very large flat screens are attached to the support arm.

In this embodiment, the lengths A1-A3 are chosen in such a way that the length A3 and A1 together are less than the length A2. In that way, the support arm in its folded position had a thickness which is about the thickness of the elements. Thus, a flatscreen will be very close to for instance a wall against which the support arm 1 is mounted.

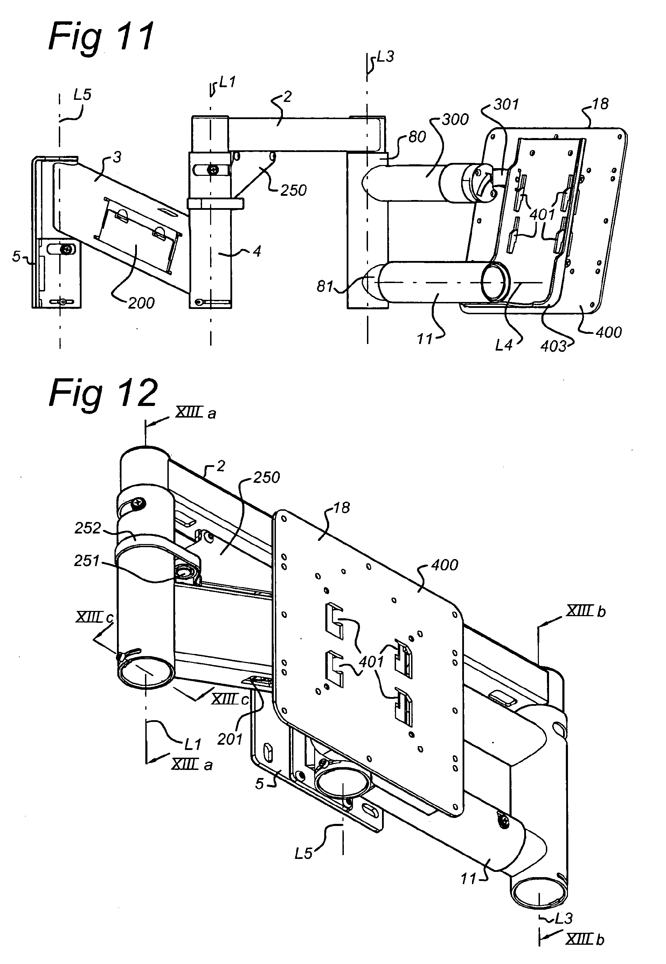

Fig. 11 is a side view of the support arm. This side view shows a compartment 200 for the control device. The control device allows the support arm to be remotely controlled, for instance. The control device allows the actuators in the different hinges for axis L5, L1, L3, L4 to cooperate in such a way that for instance a flatscreen can move away from the wall and back in such a way that it remains substantially parallel to that wall. Furthermore, it limits the movement around the hinges in such a way to prevent damage to the flatscreen. For instance, using the setting switch, the angle of rotation can be limited for several of the hinges for large screens.

Fig. 11 furthermore clearly shows a stabilisation means 250 for the arm. Further details of this stabilisation means can be discerned in fig. 12. A triangular sheet is connected to the element 2 at one side. It has two rotation means 251 (only one can be seen) attached to an adjacent side. These rotation means are here bearings, but can also be wheels or the like. The rotation means 251 roll on the tube of hinge 4. A (plastic) cap 252 protects this mechanism and hides it from sight.

The rotation means are mounted in one plane. Furthermore, they are mounted to be tangent with respect to the tube of hinge 4. In that way, a downward force of a device attached to the support arm and working on the element 2 is further lead away.

Fig. 11 also clearly shows the attachment part 18 for a flatscreen, for instance. The attachment or fastening part 18 has a plate 400. Plate 400 has hooks 401 which can be hooked into slots in a further plate 403 which is fixed to outer tube 11 which forms a hinge for rotation around axis L4 with inner tube 81. The nature of such a hinge is shown in the drawings above, and can be featured as described in fig. 9.

The plate 400 can be tilted about axis L4 using a tilting actuator. The tilting actuator is here formed using for instance an electro motor in tube 300 which has a gearing and a bent or curved rack 300 which is at one side attached to plate 403 at a distance above the axis L4. The construction using tube 300 directs forces to tube 80. When no actuator is used, tube 300 with a gearing and rack 301 and a damper can provide support for manual tilting.

Element 2 has two tubes near the end or the upper beam which extend downward and form a U-shaped second member. Together with outer tubes 80 and 4 which is attached to element 3 hinges 4 and 80 are formed using the tubes positioned with coinciding longitudinal axes. The hinge attached to attachment or fastening plate 5 is here also formed using this principle of two tubes.

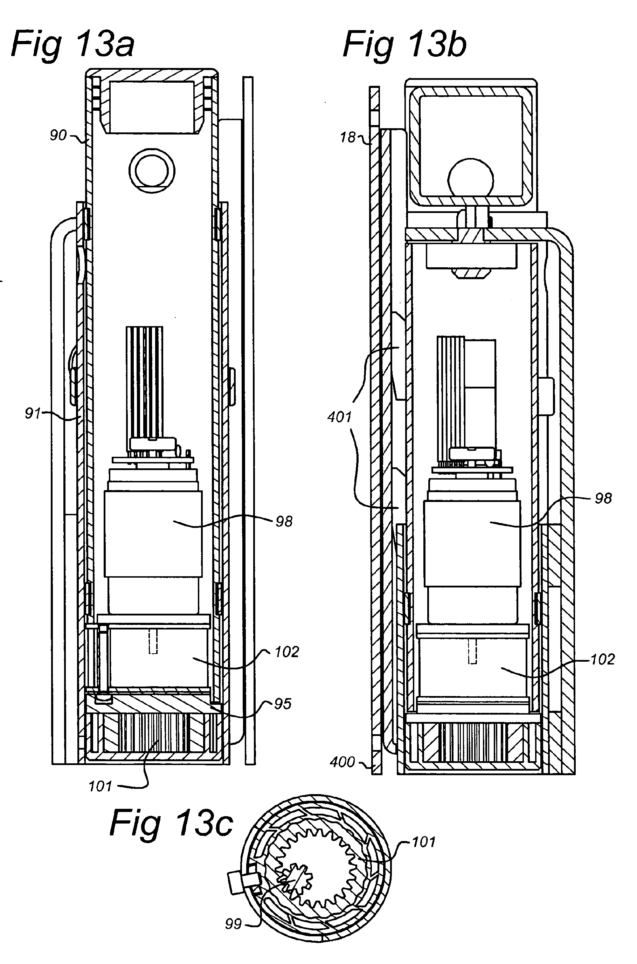

An embodiment of the hinges 4 and 80 is detailed in figures 13a, 13b and 13c showing longitudinal and transverse cross sections indicated in fig. 12. an electromotor 98 is positioned with its rotational axis parallel to the rotational axes of the tubes. At its end, it has a transmission 102 and a driving shaft extending through emd plate 95 and ending in a gear wheel 99. The gear wheel 99 runs in a track or rack 101. The round rack 101 is here fitted into a (plastic) end cap which closes off the outer tube 91. Inner tube 90 is also closed off by an end cap. Fig. 13a shows hinge 4, and fig. 13b shows hinge 80.

Electromotor 98 has a position detection means mounted on top.

It will be clear that the above description has been incorporated in order to illustrate the operation of the preferred embodiments of the invention and not in order to limit the scope of the invention. Based on the above explanation, many variations will be evident to the person skilled in the art which fall within the scope of the present invention.

## Claims

1. Support arm for an apparatus, preferably for a display screen (100), comprising:
- a first fastening part (5) for attaching the support arm to a frame or a wall;
- a first member (3), at one end coupled to the first fastening part (5) and at another end coupled to a first pivot joint (4) which allows rotation about a first axis of rotation (L1);
- a second member (2) which, at a first end, is coupled to the first pivot joint (4), and, at a second end, is provided with a second pivot joint (80) which allows rotation about a second axis of rotation (L3);
- a second fastening part (18, 400, 403) for attaching the apparatus to the support arm, which second fastening part is coupled to the second pivot joint (80), the first and second axes of rotation essentially being parallel to one another, **characterized in that**
the members (3, 2) comprise tube parts (90, 91), the pivot joints (4, 80) comprising inner tube parts (90) mounted in the tube parts (91), the inner tube parts being mounted by means of an outer ring (92) for forming a stop for an end of a tube part (91) of a member, the stop running obliquely with the acute angle being situated against the inner tube surface and the end surface of the tube parts running obliquely with the acute angle being situated at the outer surface, the outer ring (92) preferably being a plastic ring, for example made of nylon.

2. Support arm according to claim 1, in which the second member (2) is substantially U-shaped.

3. Support arm according to claim 1, in which the first member (3) is substantially L-shaped.

4. Support arm according to claim 1, in which the second fastening part (18, 400, 403) is connected to a third member (11) and the third member is coupled to the second pivot joint (80).

5. Support arm according to claim 4, in which the third member (11) is substantially L-shaped.

6. Support arm according to claim 4, in which the third member (11) is connected to the second pivot joint via a third pivot joint.

7. Support arm according to any one of claims 4 to 6, wherein the second member is longer than the sum of lengths of the first and third members.

8. Support arm according to any one of the preceding claims, in which inner tube parts (90) are furthermore mounted by bearing parts (95) at the ends of the inner tube parts which extend into the tube parts (91), the bearing parts outside the outer wall of the inner tube parts extending as far as against the inner wall of the outer tube parts, and preferably being made of plastic, such as nylon.

9. Support arm according to any one of the preceding claims, in which the pivot joints (4, 80, 81) furthermore comprise clamping parts (97) for rotatably clamping the stop of the outer ring (92) onto the end of the tube parts.

10. Support arm according to claim any one of the preceding claims, wherein a third joint having its axis of rotation substantially parallel to the axes of rotation (L1, L3) of the first and second joint (4, 80) connects the first fastening part (5) and the first member (3).

11. Support arm according to any one of the preceding claims, in which the first joint (4) is coupled with an actuator (10) which, during operation, swivels the second member 2) about the first axis of rotation (L1), the second joint (80) is coupled to a second actuator (16) which, during operation, causes the second fastening (18) to rotate or swivel about the second axis of rotation (L3), and displaces the second fastening part relative to the first fastening part (5) upon actuation of the first and second actuator.

12. Support arm according to claim when depending on claim 10, wherein said third joint is coupled with an actuator which, during operation, swivels the first member (3) about the third axis of rotation (L5).

13. Support arm according to claim 11, further comprising a control device which controls the first, second and third actuator (10, 16, 17) to be able to rotate in such a way that the apparatus, in particular a flat screen (100), maintains its orientation with respect to the first fastening part (5), in particular only increases or decreases its distance with respect to the first fastening means whilst maintaining it orientation with respect to said first fastening part.

14. Support arm according to any one of the preceding claims, wherein the lengths of the members (2, 3, 11) with respect to one another is selected such that the nearest distance between a mounting face of the second fastening part (18) and a mounting face of the first fastening part (5) of the support arm is substantially the thickness of the thickest member, including the thickness of its connecting joint of joints, whichever is thicker.

15. Support arm according to any one of the preceding claims, wherein at least one joint (4, 80, 81) comprises an inner tube (90) fixed to one of the members (2, 3, 11) connected to the joint, and an outer tube (91), extending at least partially in said inner tube (90) and with its longitudinal axis substantially coinciding with the longitudinal axis of the inner tube, fixed to an other member connected to the joint.

16. Support arm according to any one of the preceding claims, in which, in a starting position, the fastening part (5) and the first (3), second (2) and, if present, third (11) member and frame-fastening part are essentially situated in a starting plane.

17. Support arm according to claim 13, in which the actuators (9, 10, 16, 17) are coupled to the pivot joints by means of transmissions (25, 26, 27, 28), the transmission being provided with a drive shaft (49) in line with the longitudinal axis and with a first ring (41) with internal toothing thereon which is connected to the one tube part, an eccentric gear wheel (45) with a toothing which is at least one tooth smaller than the internal toothing of the first ring (41) and the toothing of which engages with the internal toothing of the first ring and which is provided with driver parts, and a second ring (40) which is connected to the other tube part and which is provided with the driver parts which mate with the driver parts of the gear wheel (45), as a result of which the first and second ring rotate with respect to one another when the actuator is in operation.

## Patentansprüche

1. Stützarm für eine Vorrichtung, vorzugsweise einen Anzeigeschirm (100), der aufweist:
- einen ersten Befestigungsteil (5) zum Befestigen des Haltearms an einem Rahmen oder einer Wand;
- ein erstes Element (3), das an einem Ende mit dem ersten Befestigungsteil (5) und an einem anderen Ende mit einem ersten Drehgelenk (4) gekoppelt ist, welches eine Drehung um eine erste Drehachse (L1) zulässt;
- ein zweites Element (2), das an einem ersten Ende mit dem ersten Drehgelenk (4) gekoppelt ist und an einem zweiten Ende mit einem zweiten Drehgelenk (80) versehen ist, welches eine Drehung um eine zweite Drehachse (L3) zulässt;
- einen zweiten Befestigungsteil (18, 400, 403) zum Befestigen der Vorrichtung an dem Stützarm, wobei der zweite Befestigungsteil mit dem zweiten Drehgelenk (80) gekoppelt ist, wobei die erste und zweite Drehachse im Wesentlichen parallel zueinander sind, **dadurch gekennzeichnet, dass**
die Elemente (3, 2) Rohrteile (90, 91) aufweisen, wobei die Drehgelenke (4, 80) in den Rohrteilen (91) montierte Innenrohrteile (90) aufweisen, wobei die Innenrohrteile mittels eines Außenrings (92) zum Ausbilden eines Anschlags für ein Ende eines Rohrteils (91) eines Elements montiert sind, wobei der Anschlag schräg verläuft, wobei der spitze Winkel gegen die Innenrohroberfläche und die Endoberfläche der Rohrteile gelegen ist, welche mit dem spitzen Winkel auf der Außenoberfläche gelegen schräg verlaufen, wobei der Außenring (92) vorzugsweise ein Kunststoffring ist, der zum Beispiel aus Nylon gefertigt ist.

2. Stützarm nach Anspruch 1, wobei das zweite Element (2) im Wesentlichen U-förmig ist.

3. Stützarm nach Anspruch 1, wobei das erste Element (3) im Wesentlichen L-förmig ist.

4. Stützarm nach Anspruch 1, wobei der zweite Befestigungsteil (18, 400, 403) mit einem dritten Element (11) verbunden ist, und das dritte Element mit dem zweiten Drehgelenk (80) gekoppelt ist.

5. Stützarm nach Anspruch 4, wobei das dritte Element (11) im Wesentlichen L-förmig ist.

6. Stützarm nach Anspruch 4, wobei das dritte Element (11) über ein drittes Drehgelenk mit dem zweiten Drehgelenk verbunden ist.

7. Stützarm nach einem der Ansprüche 4 bis 6, wobei das zweite Element länger als die Summe der Längen des ersten und dritten Elements ist.

8. Stützarm nach einem der vorhergehenden Ansprüche, wobei die Innenrohrteile (90) außerdem durch Lagerteile (95) an den Enden der Innenrohrteile montiert sind, die sich in die Rohrteile (91) erstrecken, wobei die Lagerteile außerhalb der Außenwand der Innenrohrteile sich so weit wie bis zu der Innenwand der Außenrohrteile erstrecken und vorzugsweise aus Kunststoff, wie etwa Nylon, gefertigt sind.

9. Stützarm nach einem der vorhergehenden Ansprüche, wobei die Drehgelenke (4, 80, 81) außerdem Klemmteile (97) zum drehbaren Klemmen des Anschlags des Außenrings (92) auf dem Ende der Rohrteile aufweisen.

10. Stützarm nach einem der vorhergehenden Ansprüche, wobei ein drittes Gelenk, dessen Drehachse im Wesentlichen parallel zu den Drehachsen (L1, L3) des ersten und zweiten Gelenks (4, 80) ist, den ersten Befestigungsteil (5) und das erste Element (3) verbindet.

11. Stützarm nach einem der vorhergehenden Ansprüche, wobei das erste Gelenk (4) mit einem Aktuator (10) verbunden ist, der das zweite Element (2) während des Betriebs um die erste Drehachse (L1) schwenkt, wobei das zweite Gelenk (80) mit einem zweiten Aktuator (16) verbunden ist, der während des Betriebs bewirkt, dass der zweite Befestigungsteil (18) um die zweite Drehachse (L3) schwenkt oder sich dreht, und den zweiten Befestigungsteil bei Betätigung des ersten und zweiten Aktuators relativ zu dem ersten Befestigungsteil (5) verschiebt.

12. Stützarm nach Anspruch 11 in Abhängigkeit von Anspruch 10, wobei das dritte Gelenk mit einem Aktuator gekoppelt ist, der während des Betriebs das erste Element (3) um die dritte Drehachse (L5) schwenkt.

13. Stützarm nach Anspruch 11, der ferner eine Steuervorrichtung aufweist, welche den ersten, zweiten und dritten Aktuator (10, 16, 17) steuert, so dass er fähig ist, sich in einer derartigen Weise zu drehen, dass die Vorrichtung, insbesondere ein Flachbildschirm (100), seine Orientierung in Bezug auf den ersten Befestigungsteil (5) beibehält, insbesondere nur seinen Abstand in Bezug auf die erste Befestigungseinrichtung vergrößert oder verkleinert, während er seine Orientierung in Bezug auf den Befestigungsteil beibehält.

14. Stützarm nach einem der vorhergehenden Ansprüche, wobei die Längen der Elemente (2, 3, 11) in Bezug aufeinander derart ausgewählt sind, dass der nächste Abstand zwischen einer Montagefläche des zweiten Befestigungsteils (18) und einer Montagefläche des ersten Befestigungsteils (5) des Stützarms im Wesentlichen die Dicke des dicksten Elements ist - einschließlich der Dicke seines Verbindungsgelenks von Gelenken, je nachdem, welches von ihnen dicker ist.

15. Stützarm nach einem der vorhergehenden Ansprüche, wobei wenigstens ein Gelenk (4, 80, 81) ein Innenrohr (90), das an einem der Elemente (2, 3, 11), das mit dem Gelenk verbunden ist, befestigt ist, und ein Außenrohr (91), das sich wenigstens teilweise in dem Innenrohr (90) erstreckt und wobei dessen Längsachse im Wesentlichen mit der Längsachse des Innenrohrs zusammenfällt, aufweist, das an einem anderen mit dem Gelenk verbundenen Element fixiert ist.

16. Stützarm nach einem der vorhergehenden Ansprüche, bei dem der Befestigungsteil (5) und das erste (3), das zweite (2) und, falls vorhanden, das dritte (11) Element und ein Rahmenbefestigungsteil in einer Startposition im Wesentlichen in einer Startebene liegen.

17. Stützarm nach Anspruch 13, bei dem die Aktuatoren (9, 10, 16, 17) mit Hilfe von Getrieben (25, 26, 27, 28) mit den Drehgelenken gekoppelt sind, wobei das Getriebe versehen ist mit: einer Antriebswelle (49), die mit der Längsachse ausgerichtet ist, und mit einem ersten Ring (41) mit einer Innenverzahnung darauf, der mit einem Rohrteil verbunden ist, einem exzentrischen Zahnrad (45) mit einer Verzahnung, die um wenigstens einen Zahn kleiner als die Innenverzahnung des ersten Rings (41) ist und dessen Verzahnung mit der Innenverzahnung des ersten Rings eingreift und das mit Antriebsteilen versehen ist, und einem zweiten Ring (40), der mit dem anderen Rohrteil verbunden ist und der mit den Antriebsteilen versehen, ist, die sich mit den Antriebsteilen des Zahnrads (45) paaren, wobei der erste und der zweite Ring sich als ein Ergebnis dessen relativ zueinander drehen, wenn der Aktuator in Betrieb ist.

## Revendications

1. Bras de support pour un appareil, de préférence pour un écran d'affichage (100), comprenant :
- une première partie de fixation (5) pour fixer le bras de support à un bâti ou à une paroi ;
- un premier élément (3), couplé à une extrémité à la première partie de fixation (5), et couplé à une autre extrémité à un premier joint de pivot (4) qui permet une rotation autour d'un premier axe de rotation (L1) ;
- un deuxième élément (2), qui, à une première extrémité, est couplé au premier joint de pivot (4), et qui, à une deuxième extrémité, est muni d'un deuxième joint de pivot (80) qui permet une rotation autour d'un deuxième arbre de rotation (L3) ;
- une deuxième partie de fixation (18, 400, 403) pour fixer l'appareil au bras de support, cette deuxième partie de fixation étant couplée au deuxième joint de pivot (80), les premier et deuxième axes de rotation étant essentiellement parallèles l'un à l'autre, **caractérisé en ce que** :
les éléments (3, 2) comprennent des parties de tube (90, 91), les joints de pivot (4, 80) comprenant des parties de tube intérieures (90) montées dans les parties de tube (91), les parties de tube intérieures étant montées à l'aide d'une bague extérieure (92) de façon à former un arrêt pour une extrémité d'une partie de tube (91) d'un élément, l'arrêt s'étendant en oblique avec l'angle aigu situé contre la surface de tube intérieure et la surface d'extrémité des parties de tube s'étendant en oblique avec l'angle aigu situé sur la surface extérieure, la bague extérieure (92) étant de préférence une bague en matière plastique, réalisée par exemple en Nylon.

2. Bras de support selon la revendication 1, dans lequel le deuxième élément (2) est sensiblement en forme de U.

3. Bras de support selon la revendication 1, dans lequel le premier élément (3) est sensiblement en forme de L.

4. Bras de support selon la revendication 1, dans lequel la deuxième partie de fixation (18, 400, 403) est reliée à un troisième élément (11) et le troisième élément est couplé au deuxième joint de pivot (80).

5. Bras de support selon la revendication 4, dans lequel le troisième élément (11) est sensiblement en forme de L.

6. Bras de support selon la revendication 4, dans lequel le troisième élément (11) est relié au deuxième joint de pivot par l'intermédiaire d'un troisième joint de pivot.

7. Bras de support selon l'une quelconque des revendications 4 à 6, dans lequel le deuxième élément est plus long que la somme des longueurs des premier et troisième éléments.

8. Bras de support selon l'une quelconque des revendications précédentes, dans lequel des parties de tube intérieures (90) sont de plus montées à l'aide de parties de palier (95) aux extrémités des parties de tube intérieures qui s'étendent à l'intérieur des parties de tube (91), les parties de palier à l'extérieur de la paroi extérieure des parties de tube intérieures s'étendant jusqu'à porter contre la paroi intérieure des parties de tube extérieures, et étant de préférence réalisées en matière plastique, par exemple en Nylon.

9. Bras de support selon l'une quelconque des revendications précédentes, dans lequel les joints de pivot (4, 80, 81) comprennent de plus des parties de serrage (97) pour serrer de façon à ce qu'il puisse tourner l'arrêt de la bague extérieure (92) sur l'extrémité des parties de tube.

10. Bras de support selon l'une quelconque des revendications précédentes, dans lequel un troisième joint ayant son axe de rotation sensiblement parallèle aux axes de rotation (L1, L3) des premier et deuxième joints (4, 80) relie la première partie de fixation (5) et le premier élément (3).

11. Bras de support selon l'une quelconque des revendications précédentes, dans lequel le premier joint (4) est couplé à un actionneur (10) qui, durant le fonctionnement, fait pivoter le deuxième élément (2) autour du premier axe de rotation (L1), le deuxième joint (80) est couplé à un deuxième actionneur (16) qui, durant le fonctionnement, provoque la rotation ou le pivotement de la deuxième fixation (18) autour du deuxième axe de rotation (L3), et déplace la deuxième partie de fixation par rapport à la première partie de fixation (5) lors de l'actionnement des premier et deuxième actionneurs.

12. Bras de support selon la revendication 11 dépendant de la revendication 10, dans lequel ledit troisième joint est couplé à un actionneur qui, durant le fonctionnement, fait pivoter le premier élément (3) autour du troisième axe de rotation (L5).

13. Bras de support selon la revendication 11, comprenant de plus un dispositif de commande qui commande les premier, deuxième et troisième actionneurs (10, 16, 17) de façon à être susceptibles de tourner de telle sorte que l'appareil, en particulier un écran plat (100), conserve son orientation par rapport à la première partie de fixation (5), et, en particulier, augmente ou diminue uniquement sa distance par rapport aux premiers moyens de fixation tout en conservant son orientation par rapport à ladite première partie de fixation.

14. Bras de support selon l'une quelconque des revendications précédentes, dans lequel les longueurs des éléments (2, 3, 11) les uns par rapport aux autres sont sélectionnées de telle sorte que la distance la plus courte entre une face de montage de la deuxième partie de fixation (18) et une face de montage de la première partie de fixation (5) du bras de support soit sensiblement l'épaisseur de l'élément le plus épais, y compris l'épaisseur de son joint de liaison qui est le plus épais parmi les joints.

15. Bras de support selon l'une quelconque des revendications précédentes, dans lequel au moins un joint (4, 80, 81) comprend un tube intérieur (90) fixé à l'un des éléments (2, 3, 11) relié au joint, et un tube extérieur (91), s'étendant au moins partiellement dans ledit tube intérieur (90) et avec son axe longitudinal coïncidant sensiblement avec l'axe longitudinal du tube intérieur, fixé à un autre élément relié au joint.

16. Bras de support selon l'une quelconque des revendications précédentes, dans lequel, dans une position de départ, la partie de fixation (5) et les premier (3), deuxième (2), et, s'il est présent, le troisième (11), éléments et la partie de fixation de bâti sont essentiellement situés dans un plan de départ.

17. Bras de support selon la revendication 13, dans lequel les actionneurs (9, 10, 16, 17) sont couplés aux joints de pivot à l'aide de transmissions (25, 26, 27, 28), la transmission étant munie d'un arbre d'entraînement (49) aligné avec l'axe longitudinal, et d'une première bague (41) avec une denture intérieure sur celle-ci, qui est reliée à la première partie de tube, d'une roue dentée excentrique (45) avec une denture qui est inférieure d'au moins une dent à la denture intérieure de la première bague (41), et dont la denture s'engrène avec la denture intérieure de la première bague et qui est munie de parties d'entraînement, et d'une deuxième bague (40) qui est reliée à l'autre partie de tube et qui est munie des parties d'entraînement qui s'accouplent avec les parties d'entraînement de la roue dentée (45), en résultat de quoi les première et deuxième bague tournent l'une par rapport à l'autre lorsque l'actionneur est en fonctionnement.
